(19) Europäisches Patentamt
European Patent Office
Office européen des brevets

(11) **EP 4 394 954 A1**

(12) # EUROPEAN PATENT APPLICATION
published in accordance with Art. 153(4) EPC

(43) Date of publication:
**03.07.2024 Bulletin 2024/27**

(21) Application number: **22861399.8**

(22) Date of filing: **24.08.2022**

(51) International Patent Classification (IPC):
$H01M\ 8/00$ (2016.01)    $H01M\ 8/04$ (2016.01)
$H01M\ 8/04014$ (2016.01)    $H01M\ 8/04029$ (2016.01)
$H01M\ 8/04313$ (2016.01)    $H01M\ 8/0432$ (2016.01)
$H01M\ 8/0438$ (2016.01)    $H01M\ 8/04537$ (2016.01)
$H01M\ 8/04746$ (2016.01)    $H01M\ 8/10$ (2016.01)
$G06Q\ 50/06$ (2012.01)    $F24H\ 1/00$ (2022.01)

(52) Cooperative Patent Classification (CPC):
F24H 1/00; G06Q 50/06; H01M 8/00; H01M 8/04;
H01M 8/04014; H01M 8/04029; H01M 8/04313;
H01M 8/0432; H01M 8/0438; H01M 8/04537;
H01M 8/04746; H01M 8/10; Y02E 60/50

(86) International application number:
**PCT/JP2022/031889**

(87) International publication number:
**WO 2023/027111 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.08.2021 JP 2021139424
29.03.2022 JP 2022054361**

(71) Applicant: **Kyocera Corporation
Kyoto-shi Kyoto 612-8501 (JP)**

(72) Inventor: **UCHI, Kazutaka
Kyoto-shi, Kyoto 612-8501 (JP)**

(74) Representative: **TBK
Bavariaring 4-6
80336 München (DE)**

(54) **ELECTRICITY GENERATING SYSTEM, AND INFORMATION PROCESSING DEVICE**

(57)    Provided are a power generation system and an information processor that appropriately assesses a value of heat generated in a fuel cell. A power generation system (1) includes a power generator (10) including a power generation unit (101) including a fuel cell, and an information processor (40). The power generation system is configured to provide a user with heat generated in the fuel cell, and the information processor calculates the monetary value in accordance with a detected amount of heat provided to the user. The power generator may include a heat medium unit (102) configured to retain a heat medium retaining at least a portion of the heat generated in the fuel cell. The heat medium unit is connected to a heat conduit configured to discharge heat. The information processor may calculate the monetary value in accordance with the detected amount of heat in the heat conduit.

FIG. 1

EP 4 394 954 A1

**Description**

CROSS-REFERENCE TO RELATED APPLICATIONS

The present application claims priority of Japanese Patent Application No. 2021-139424 (filed on August 27, 2021) and Japanese Patent Application No. 2022-054361 (filed on March 29, 2022), and disclosures of these applications are entirely incorporated herein for reference.

TECHNICAL FIELD

The present disclosure relates to a power generation system and an information processor.

BACKGROUND OF INVENTION

In recent years, greenhouse effect gases have had seriously problematic impacts, including an increase in global temperature. For example, Patent Literature 1 discloses a technique of assessing the value of in-house green power consumption to reduce the volume of greenhouse effect gas emission through the promotion of green power use.

CITATION LIST

PATENT LITERATURE

Patent Literature 1: Japanese Unexamined Patent Application Publication No. 2021-61733

SUMMARY

In an embodiment of the present disclosure, a power generation system includes a power generator and an information processor. The power generator includes a power generation unit including a fuel cell. The power generation system is configured to provide a user with heat generated in the fuel cell. The information processor calculates a monetary value in accordance with a detected amount of heat provided to the user.

In an embodiment of the present disclosure, an information processor is configured to calculate, in a power generation system configured to provide a user with heat generated in a fuel cell included in a power generation unit in a power generator, a monetary value in accordance with a detected amount of heat provided to the user.

BRIEF DESCRIPTION OF THE DRAWINGS

FIG. 1 is a schematic diagram of a power generation system including an information processor configured to calculate a thermal environment score.

FIG. 2 is a diagram illustrating an exemplary configuration of a power generation system according to an embodiment.
FIG. 3 is a diagram illustrating an exemplary configuration of a power generation system according to another embodiment.
FIG. 4 is a schematic diagram of a power generation system according to another embodiment.
FIG. 5 is an explanatory view illustrating calculation of a monetary value.

DESCRIPTION OF EMBODIMENTS

(First Embodiment)

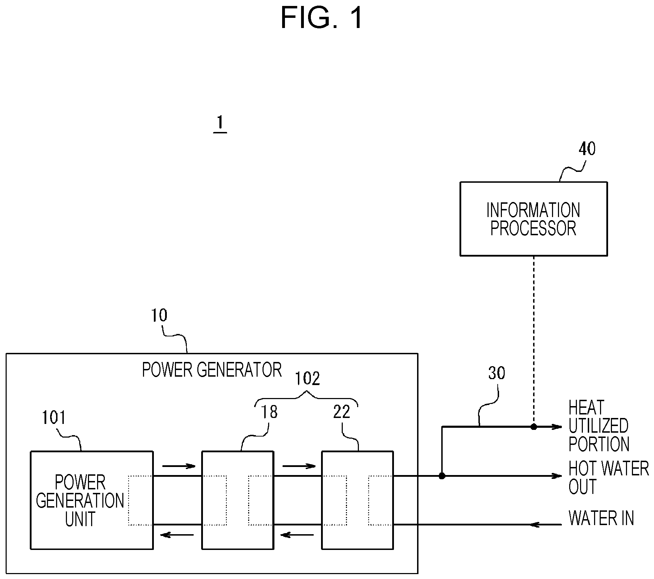

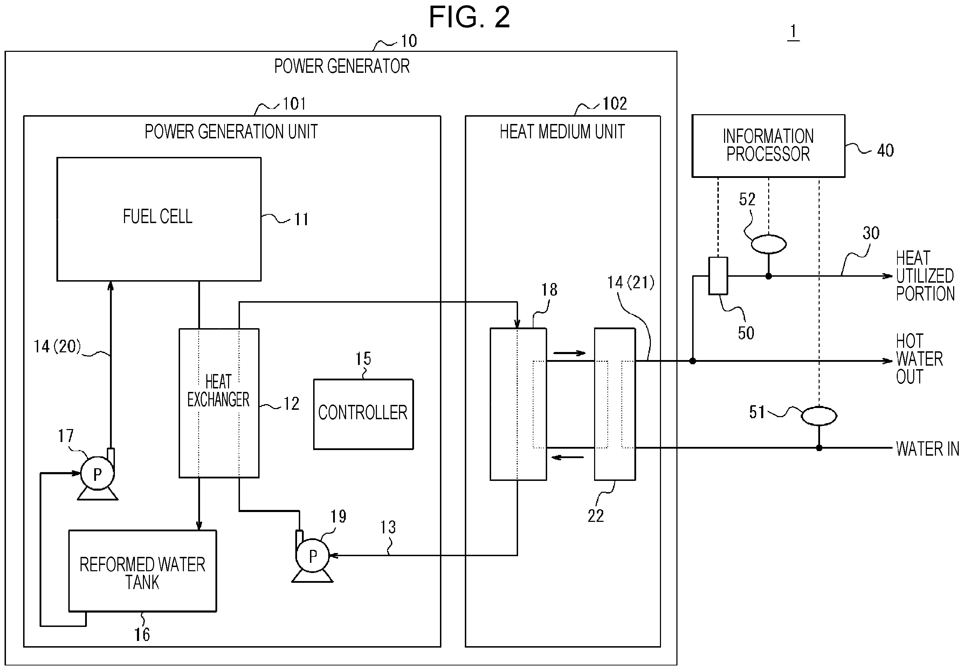

FIG. 1 is a schematic diagram exemplarily illustrating a power generation system 1 including a power generator 10 and an information processor 40 configured to calculate a thermal environment score as a monetary value to be described later. The thermal environment score is numerical information pertaining to the assessment of a value of heat provided to a user from heat generated in a fuel cell 11 (see FIG. 2) included in a power generation unit 101. The thermal environment score is numerical information corresponding to an effect of reducing the volume of greenhouse effect gas emission and is convertible to a monetary value. In other words, the monetary value is not limited to having a direct monetary value and may rather be a value convertible to a monetary value. The first embodiment will describe exemplary calculation of the thermal environment score as the monetary value. The information processor 40 provides the thermal environment score to the user of the power generator 10. The thermal environment score may be convertible, at a predetermined conversion rate, to money or to a different score available for settlement of a commercial product.

The power generator 10 includes the power generation unit 101 including the fuel cell 11. As in the present embodiment, the power generator 10 may be a cogeneration system including both a fuel cell facility (the power generation unit 101) and a heat medium facility (a heat medium unit 102). The power generator 10 may alternatively be a monogeneration system not including a heat medium facility. The power generator 10 may alternatively be a pure hydrogen fuel cell configured to use hydrogen directly as fuel. The power generator 10 may be used, for example, with a photovoltaic generator or the like or may be used alone. The power generator 10 may be applied for business or industrial use as well as for domestic use.

The fuel cell 11 generates heat upon power generation. A portion of the generated heat, for example, maintains the temperature of the fuel cell 11 and heats a heat medium circulating in the power generation unit 101. The heat medium thus heated is retained in a heat medium tank 18 (see FIG. 2) in the heat medium unit 102. In the present embodiment, the heat medium may be water or an antifreeze solution.

The heat medium unit 102 retains a heat medium retaining at least surplus heat. FIG. 1 illustrates the heat medium unit 102 including a clean water heat exchanger 22 in addition to the heat medium tank 18 mentioned above. As illustrated in FIG. 1, the clean water heat exchanger 22 receives the heat medium thus heated from the heat medium tank 18 and clean water from a water entry side. The heat medium and the clean water thus received exchange heat. The clean water (hot water) heated through heat exchange is supplied from (exits) a hot water exit side and flows in a hot water supply path to be utilized for in-house consumption. Meanwhile, the heat medium cooled through heat exchange in the clean water heat exchanger 22 returns to the heat medium tank 18. Examples of the hot water supply path may include a hot water supply pipe in a residence equipped with the power generator 10.

In the present embodiment, the hot water supply path is connected to a heat conduit 30 configured to discharge heat. The heat conduit 30 may be connected directly to the heat medium tank 18. Heated water (hot water) is supplied through the heat conduit 30 as surplus heat not consumed in-house. The heat conduit 30 may be a pipe different from the hot water supply path in a residence equipped with the power generator 10 (or may be a pipe branched from the hot water supply path). The heat conduit 30 enables the surplus heat (heated water not consumed in-house) to be utilized for hot water supply, heating, and the like in a facility, a building, or the like other than a residence equipped with the power generator 10, thus achieving an area heat network. That is, surplus heat of the fuel cell 11 to be supplied via the heat conduit 30 has a value convertible to money. The fuel cell 11 does not emit carbon dioxide during power generation. Use of the fuel cell 11 accordingly achieves a reduction in the volume of greenhouse effect gas emission. The surplus heat of the fuel cell 11 to be supplied via the heat conduit 30 thus has environmental value.

The information processor 40 acquires a detection result of a sensor or the like provided to the heat conduit 30 and calculates a value of surplus heat of the fuel cell 11 supplied (utilized) via the heat conduit 30. That is, the information processor 40 calculates the thermal environment score in accordance with the detected amount of heat, of the surplus heat, provided to the user. The thermal environment score is described later in terms of calculation expressions therefor. Upon calculation of the thermal environment score according to the detected amount of heat provided to the user, the information processor 40 may calculate the thermal environment score in accordance with the heat, of the surplus heat, actually used by the user and the detected amount.

The information processor 40 may include, for example, a communication unit, storage, a controller, and a display.

The communication unit may be an interface for wired and/or wireless communication with the sensor or the like provided to the heat conduit 30. The communication unit may include a communication interface in conformity with a mobile communication standard such as 4G or 5G, a preferential wireless LAN standard, or the like.

The storage includes one or more memory units. Examples of the memory include semiconductor memory, magnetic memory, and optical memory. The memory is not limited thereto and can be any memory.

The controller includes one or more processors. Examples of the processor include a general-purpose processor and a dedicated processor specialized for specific processing. The processor is not limited thereto and can be any processor. The dedicated processor may include an ASIC (application specific integrated circuit). The processor may include a PLD (programmable logic device). The PLD may include an FPGA (field-programmable gate array). The controller may be either an SoC (system-on-a-chip) or an SiP (system in a package) for one processor or a plurality of processors in cooperation. The controller controls the overall operation of the information processor 40.

The display displays the thermal environment score calculated for the user. Examples of the display may include a liquid crystal display and an OEL (organic electro-luminescence) display.

The information processor 40 may be embodied by a computer or the like. The computer includes a communication device for connection to a network or the like, a storage device such as memory, a CPU, and a display device such as a display. The communication unit, the storage, the controller, and the display in the information processor 40 may be embodied by, for example, the communication device, the storage device, the CPU, and the display device, respectively. The CPU may be configured to read a program stored in the storage device and perform calculation of the thermal environment score. The information processor 40 may be placed in a residence equipped with the power generator 10 or may be placed away from the residence as long as information can be, via the network, transmitted to and received from the sensor or the like provided to the heat conduit 30. The information processor 40 implemented as an application for mobile phones achieves improved operability, visibility, and complexity in a procedure and the like.

FIG. 2 is a diagram illustrating an exemplary configuration of the power generation system 1 according to the present embodiment. The power generation system 1 is hereinafter described in detail with reference to FIG. 2.

The power generator 10 includes the fuel cell 11, a heat exchanger 12, a circulation path 13, a liquid flow path 14, a controller 15, a reformed water tank 16, a reformed water pump 17, the heat medium tank 18, and a heat medium pump 19. In the present embodiment, the heat medium unit 102 includes part of a hot water supply path 21 in the liquid flow path 14, the clean water heat exchanger 22, and the heat medium tank 18. The power generation unit 101 includes constituent elements other than the above. The power generator 10 is not limited to including all the constituent elements illustrated in FIG. 2. The power generator 10 may include any constituent element other than the constituent elements illustrated in FIG. 2.

The fuel cell 11 generates power by using supplied gas, air, and reformed water. The fuel cell 11 emits exhaust gas at a high temperature upon power generation. The fuel cell 11 includes an exhaust path. The fuel cell 11 discharges the exhaust gas to the heat exchanger 12 via the exhaust path. According to the present embodiment, the fuel cell 11 exemplifies a case where the clean water heat exchanger 22 causes indirect heat exchange such that clean water exchanges heat with the heat medium in the heat medium tank 18 and exits as hot water. The fuel cell 11 may be of a type in which the clean water heat exchanger 22 is provided in the heat medium tank 18. As to be described later, the fuel cell 11 may adopt a direct heat exchange scheme of directly discharging the heat medium (hot water) retained in the heat medium tank 18.

The heat exchanger 12 causes heat exchange between exhaust heat discharged via the exhaust gas from the fuel cell 11 and the heat medium. As described above, in the present embodiment, the heat medium may be water or an antifreeze solution. The reformed water tank 16 retains reformed water (condensate water) which is obtained from the exhaust gas through condensation by heat exchange with the heat medium in the heat exchanger 12. That is, water discharged from the heat medium tank 18 in the heat medium unit 102 cools the exhaust gas from the fuel cell 11 to generate the reformed water (condensate water) which is to be discharged to the reformed water tank 16. The reformed water retained in the reformed water tank 16 is increased in pressure by the reformed water pump 17 and supplied to the fuel cell 11.

The circulation path 13 causes circulation of the heat medium passing through the heat exchanger 12. The circulation path 13 may allow circulation of the heat medium between the heat exchanger 12 and the heat medium tank 18. The heat medium tank 18 may retain the heat medium.

The circulation path 13 may be provided with the heat medium pump 19. The heat medium pump 19 increases pressure of the heat medium to cause circulation in the circulation path 13. Operation of the heat medium pump 19 may be controlled by the controller 15.

The liquid flow path 14 is a path allowing movement of liquid, not including the circulation path 13, and relevant to operation of the fuel cell 11. The liquid flow path 14 includes, for example, a supply path 20 provided for supply of reformed water to the fuel cell 11, and the hot water supply path 21 provided for discharge of heated water through use of heat obtained from the heat medium. The supply path 20 extends from the reformed water tank 16 to be connected to the fuel cell 11 via the reformed water pump 17. The hot water supply path 21 is supplied with clean water from the water entry side. The clean water passing through the clean water heat exchanger 22 exchanges heat with the heat medium in the heat medium tank 18, and the water having exchanged heat (hot water) is discharged from the hot water exit side.

The heat conduit 30 is a pipe branching from the hot water supply path 21. The hot water is supplied to a facility other than a residence equipped with the power generator 10 via the heat conduit 30 and can be utilized for hot water supply, heating, and the like in the facility, thus achieving an area heat network for effective utilization of surplus heat (hot water). This can decrease the necessity for wasteful disposal of the surplus heat and can suppress the heat storage capacity of the heat medium tank 18 from restricting the power generation capacity of the fuel cell 11.

The surplus heat can be provided to the user by simply connecting the heat conduit 30 to the hot water supply path without a significant change to an existing facility. This achieves provision of the surplus heat to the user in a simple and inexpensive manner. The hot water supply path for in-house consumption may occasionally be connected to a mixing pipe configured to cause clean water to be mixed for temperature adjustment of supplied hot water. In this case, surplus heat having a higher temperature can be provided when the heat conduit 30 is connected to an upstream portion of a joining portion with the mixing pipe. The heat conduit 30 may be connected to the hot water supply path 21 via a three-way valve. Furthermore, a more frequent decrease in the temperature of the heat medium in the heat medium tank 18 can achieve a reduction in the capacity of the heat medium tank 18 necessary for continuous power generation. This can improve an essential demerit of the fuel cell which needs a large installation space for the heat medium tank 18. Moreover, the fuel cell 11 is also easily applicable to a case of low heat demand relative to power demand, thus contributing to an increase in the popularization of fuel cells.

A flow rate sensor 50 detects an amount (a flow rate) of hot water flowing in the heat conduit 30. A first temperature sensor 51 is provided on the water entry side of the hot water supply path 21 and detects the temperature of water entering the heat medium tank 18. A second temperature sensor 52 is provided to the heat conduit 30 and detects the temperature of hot water flowing in the heat conduit 30. Each of the first temperature sensor 51 and the second temperature sensor 52 may be a thermistor but is not limited thereto.

The information processor 40 receives, as a detected amount of heat, of surplus heat, provided to the user, a flow rate (F) detected by the flow rate sensor 50, a temperature (T1) detected by the first temperature sensor 51, and a temperature (T2) detected by the second temperature sensor 52. The information processor 40 then calculates a thermal environment score (P) in accordance with expression (1) below.

$$P = (T2 - T1) \times F \times a \ ... \ (1)$$

This expression includes "a" as a coefficient for correspondence with the effect of a reduction in the volume of greenhouse effect gas emission. As to be described later, the information processor 40 may vary "a" depending on the operation condition of the power generator 10.

The controller 15 includes one or more processors and memory. The one or more processors may include a general-purpose processor configured to execute a specific function in accordance with a read specific program and a dedicated processor configured only for specific processing. The dedicated processor may include an ASIC. The processor may include a PLD. The PLD may include an FPGA. The controller 15 may be any one of an SoC and an SiP for one processor or a plurality of processors in cooperation.

The controller 15 controls the constituent elements of the power generator 10 including the fuel cell 11. For example, the controller 15 operates or stops the fuel cell 11. The controller 15 may output, to the information processor 40, information on the operation of the power generator 10 or the like. The information on the operation of the power generator 10 may include information that power has a reverse power flow in an exemplary case where the power generator 10 is used with a photovoltaic generator or the like. The information on the operation of the power generator 10 may further include information that the power generation unit 101 has a function of a virtual power plant or demand response. Power having a reverse power flow and provision of the function of a virtual power plant or demand response enhance merits of the user. This can also contribute to increasing the popularization of fuel cells provided with power having a reverse power flow, or the function of a virtual power plant or demand response, and can also lead to stable power supply.

The controller 15 may control the power generator 10 such that clean water (hot water) having exchanged heat in the clean water heat exchanger 22 is discharged from the heat conduit 30 not only upon a power outage but also during normal power generation. The power generator 10 has occasionally had a function of discharging hot water in the heat medium tank 18 from the hot water exit side to avoid power generation stoppage upon a power outage. In the present embodiment, also during normal power generation, clean water (hot water) having exchanged heat in the clean water heat exchanger 22 is discharged from the heat conduit 30, and the heat medium in the heat medium tank 18 cooled through heat exchange with clean water in the clean water heat exchanger 22 returns to the heat medium tank 18. The heat medium in the heat medium tank 18 can thus be decreased in temperature to avoid the power generator 10 stopping power generation. Unlike discharge of hot water upon a power outage in the related art, in the present embodiment, hot water continuously supplied from the heat conduit 30 is effectively utilized as a heat medium with no waste.

Such control can suppress operation of the power generator 10 to be executed when the heat medium tank 18 becomes full. In an exemplary case where the fuel cell 11 is an SOFC (solid oxide fuel cell) and the heat medium tank 18 becomes full, a radiator operates to decrease the temperature of a heat storage unit. The controller 15 described above performs control to reduce use of the radiator and achieve a noise reduction. The power generator 10 will further achieve a reduction in size and cost through elimination of the radiator.

The controller 15 may control the power generator 10 such that the heat conduit 30 supplies heated water heated in the clean water heat exchanger 22 before the heat medium tank 18 in the heat medium unit 102 becomes full. This can more safely suppress operation of the power generator 10 to be executed when the heat medium tank 18 becomes full.

The information processor 40 may adjust "a" such that the thermal environment score increases when power has a reverse power flow in an exemplary case where the power generator 10 is used with a photovoltaic generator or the like.

The information processor 40 may adjust "a" such that the thermal environment score increases in an exemplary case where the power generation unit 101 has the function of a virtual power plant or demand response (participates in one of these schemes).

As described above, according to the present embodiment, the power generation system 1 and the information processor 40 are thus configured to achieve appropriate assessment of the value of heat generated in the fuel cell 11.

(Second Embodiment)

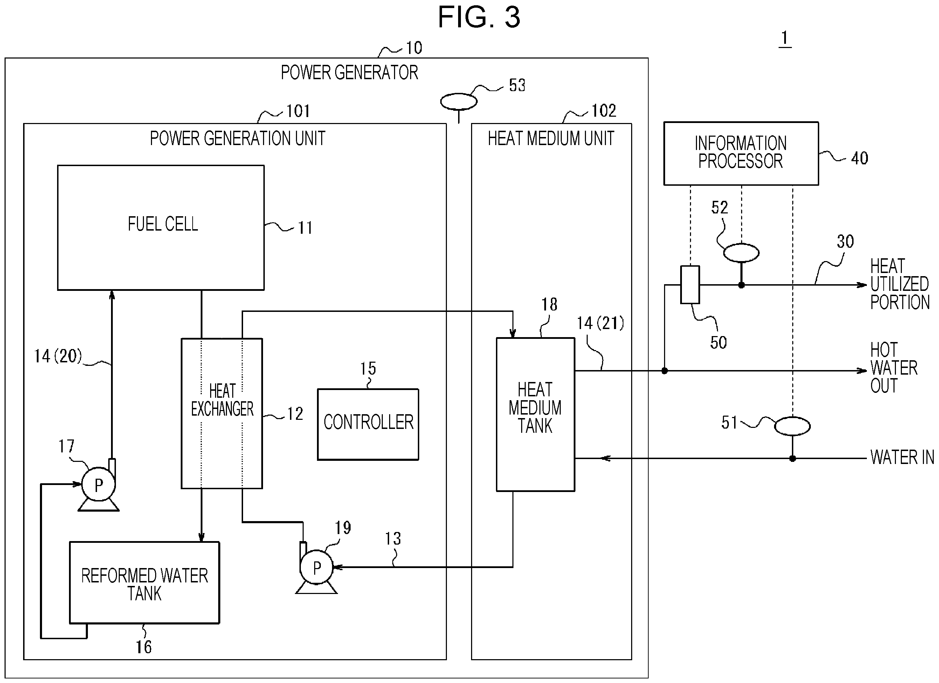

FIG. 3 relates to another embodiment (the second embodiment). Configurations the same as the configurations described with reference to FIGs. 1 and 2 will not be described repeatedly. In FIG. 3, the hot water supply path 21 includes a water entry pipe and a hot water supply pipe attached to the heat medium tank 18 in the heat medium unit 102. That is, the heat medium in the heat medium tank 18 may be water, and FIG. 3 illustrates a direct heat exchange type in which the water retained in the heat medium tank 18 is discharged directly.

As illustrated in FIG. 3, clean water supplied from the water entry side flows in the circulation path 13 to exchange heat in the heat exchanger 12. The heat medium tank 18 retains the clean water having exchanged heat. When the heat medium tank 18 becomes full, water (hot water) in the heat medium tank 18 is discharged from the heat conduit 30, and the heat medium tank 18 is supplied with clean water equal in volume to the discharged water to achieve a decrease in the temperature of the heat medium in the heat medium tank 18.

This can decrease the necessity for wasteful disposal of surplus heat. The heat conduit 30 is connected to the heat conduit 30 provided for an area heat network and connected to a facility or a building other than a residence to enable effective utilization of heat as in the above embodiment.

In the present embodiment, the information processor 40 receives, as a detected amount of available heat, of surplus heat, provided to the user, the flow rate (F) detected by the flow rate sensor 50, the temperature (T2) detected by the second temperature sensor 52, and a temperature (T3) detected by an outdoor air temperature sensor 53. The information processor 40 then calculates the thermal environment score (P) in accordance with expression (2) below.

$$P = (T2 - T3) \times F \times b \ ... \ (2)$$

This expression includes "b" as a coefficient for correspondence with the effect of a reduction in the volume of greenhouse effect gas emission. The information processor 40 may vary "b" in accordance with operation condition of the power generator 10.

FIG. 3 and expression (2) may be applied to an exemplary case where the fuel cell 11 is a PEFC (polymer electrolyte fuel cell). The PEFC stops power generation or decreases output when the heat medium tank 18 becomes full. For example, the heat medium tank 18 is likely to become full during a time period in which power consumption is high and also in summer, in which hot water usage is lower. Power generation stoppage or a decrease in output in this case necessitates purchase of power from a power grid, resulting in failure of the fuel cell to exert merits such as a reduction in charges for heat and electricity. In the present embodiment, the controller 15 described above performs control to avoid power generation stoppage and the like and to enhance the flexibility of power generation. This improves an essential demerit of the PEFC whose power generation capacity is restricted depending on the heat storage capacity of the heat medium tank 18.

Furthermore, surplus heat in the PEFC is supplied from the heat conduit 30 to decrease the necessity for wasteful disposal of the surplus heat, as well as to decrease the temperature of the heat medium in the heat medium tank 18. This also enables continuous operation of the PEFC with no waste for a long duration (e.g., one month). This further improves an essential demerit of the PEFC that cannot operate autonomously if power fails during power generation stoppage due to full storage.

In expressions (1) and (2) above, "a" and "b" may be adjusted to increase the thermal environment score in accordance with a type of source gas. In an exemplary case where the source gas is hydrogen, which does not result in carbon dioxide emission, the thermal environment score may have additional environmental value because of no generation of greenhouse effect gas.

The information processor 40 may utilize, for provision of the thermal environment score, drainage of water from the heat medium tank 18 as surplus heat upon long-term absence. In this case, the thermal environment score may be calculated in accordance with expression (2).

Power generation has often been stopped or reduced at night because electricity consumption is low. EVs (electric vehicles) will be popularized in the future, and rated output or power generation capacity may be increased for in-house charging at night. Also in such a case, surplus heat is effectively utilized with no wasteful disposal.

(Third Embodiment)

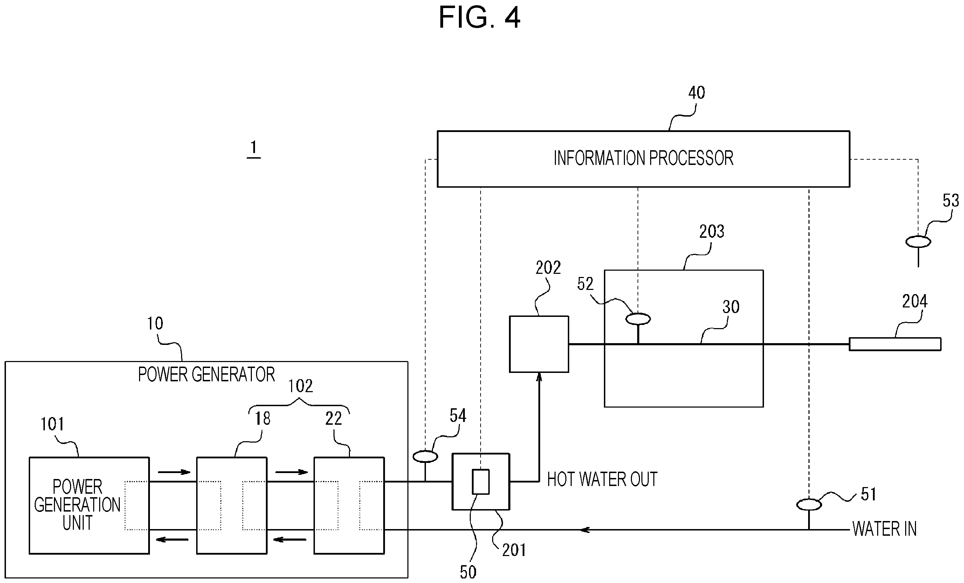

FIG. 4 is a schematic diagram of a power generation system 1 according to another embodiment (third embodiment). Configurations the same as the configurations described with reference to FIGs. 1 to 3 will not be described repeatedly. The information processor 40 calculates the thermal environment score in the first and second embodiments. The information processor 40 may alternatively calculate a monetary value more directly without using a score. The first and second embodiments exemplify mainly clean water for an area heat network. However, heat from domestic drainage (sewage) is also applicable to the area heat network. The present embodiment describes an area heat network while exemplifying sewage. In the following description, in-house use of heat generated in the fuel cell 11 is referred to as "in-house consumption". Waste water means domestic drainage excluding excrement and drainage from flush toilets. Waste water contains bath drainage from baths, kitchen drainage from kitchens, and the like.

In the power generation system 1 according to the present embodiment, the heat conduit 30 enables a flow of surplus heat in drainage, of heat generated in the fuel cell 11, after in-house consumption. The fuel cell 11 and a facility 202 for in-house consumption interpose a hot water supply unit 201. As to be described later, a monetary value is calculated in accordance with a flow rate of drainage, and the flow rate is measured by the flow rate sensor 50 included in the hot water supply unit 201. Surplus heat generated in the power generator 10 and provided to the user is sensed by a third temperature sensor 54 provided between the clean water heat exchanger 22 and the hot water supply unit 201. Examples of the facility 202 for in-house consumption include a bathroom, a kitchen, and a lavatory. Hot water (and water not heated) used in the facility 202 for in-house consumption passes through the hot water supply unit 201, and the flow rate sensor 50 included in the hot water supply unit 201 measures the flow rate of drainage.

The present embodiment provides a drainage facility 203 disposed between the facility 202 for in-house consumption and a sewage pipe 204. The drainage facility 203 includes the heat conduit 30 coupling the facility 202 for in-house consumption and the sewage pipe 204. As to be described later, a monetary value is calculated in accordance with the temperature of drainage, and the temperature is measured at the heat conduit 30 included in the drainage facility 203. In the present embodiment, the second temperature sensor 52 is provided to the heat conduit 30 included in the drainage facility 203 and detects the temperature of hot water flowing in the heat conduit 30. The third temperature sensor 54 measures surplus heat provided by the power generator 10. In a case of the third temperature sensor 54 value ≥ the second temperature sensor 52 value, the second temperature sensor 52 value may be regarded as the temperature of drainage from the power generator 10 for calculation of the monetary value. In another case of the third temperature sensor 54 value < the second temperature sensor 52 value, the third temperature sensor 54 value may be regarded as the temperature of drainage from the power generator 10 for calculation of the monetary value. When a bypass flow path is provided from a water entry line to the hot water supply unit 201, the flow rate sensor 50 and the third temperature sensor 54 may be provided closer to the power generator 10 than a position at which the bypass flow path joins in a flow path connecting the power generator 10 and the hot water supply unit 201. The flow rate sensor 50 and the third temperature sensor 54 may check whether or not the power generator 10 discharges drainage and check the drainage temperature. In addition, when the third temperature sensor 54 detects no change in temperature, the power generator 10 can be determined as not discharging drainage. The following description refers to calculation of a monetary value, assuming the third temperature sensor 54 value ≥ the second temperature sensor 52 value, and the second temperature sensor 52 value as the temperature of drainage from the power generator 10. The power generation system 1 may include the outdoor air temperature sensor 53 for further acquisition of air temperature information.

The present embodiment exemplifies waste water as drainage that is a target of a monetary value calculation and has a temperature to be measured. The drainage having a temperature to be measured contains at least bath drainage. A bath typically uses a large amount of hot water and discharges hot drainage. Accordingly, an area heat network is more likely to be achieved compared with other waste water.

When sewage heat is utilized as in the present embodiment, the temperature of hot water flowing in the heat conduit 30 is preferably detected in each individual residence. The second temperature sensor 52 may be disposed between, for example, the facility 202 for in-house consumption and a dirty water storage. However, a multiple occupancy residence is often equipped with a common dirty water storage, and the second temperature sensor 52 may thus be disposed downstream of the waste water.

When sewage heat is utilized as in the present embodiment, the user of the heat will often use the heat while sewage heat is collected from a plurality of residences. The information processor 40 may thus totalize the detected amount of heat provided from respective residences to the user (heat provided by the power generators 10) and the amount of heat actually utilized by the user, to calculate the monetary value proportionally divided in accordance with a contribution degree of each of the power generators 10.

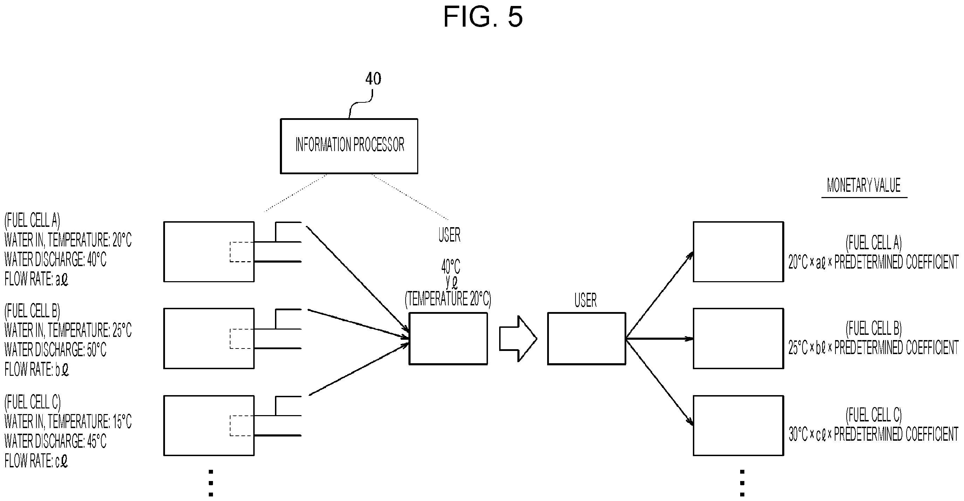

FIG. 5 is an explanatory view illustrating calculation of the monetary value. The information processor 40 receives the flow rate (F) detected by the flow rate sensor 50, the temperature (T1) detected by the first temperature sensor 51, and the temperature (T2) detected by the second temperature sensor 52. The information processor 40 may then calculate the monetary value (V) in accordance with expression (3) below.

$$ V = (T2 - T1) \times F \times \alpha \ldots (3) $$

This expression includes "$\alpha$" as a predetermined coefficient. The predetermined coefficient may indicate a standard monetary value. FIG. 5 exemplifies a case where a residence including a fuel cell A has 40°C as T2 (drainage temperature), 20°C as T1 (entry water temperature), and a liters as F (flow rate). The monetary value is $20 \times a \times \alpha$ in this case. A residence including a fuel cell B has 50°C as T2 (drainage temperature), 25°C as T1 (entry water temperature), and b liters as F (flow rate). The monetary value is $25 \times b \times \alpha$ in this case. A residence including a fuel cell C has 45°C as T2 (drainage temperature), 15°C as T1 (entry water temperature), and c liters as F (flow rate). The monetary value is $30 \times c \times \alpha$ in this case.

In an exemplary case where the heat user earns heat usage fee income (Z) from a demander, the predetermined coefficient $\alpha$ may have a value obtained by dividing Z by a total usage amount (y). FIG. 5 exemplifies the total usage amount y that can be calculated as a + b + c + .... For example, the monetary value for the fuel cell A is $20 \times a \times Z \times \alpha/y$.

As another exemplary calculation, the information processor 40 receives the flow rate (F) detected by the flow rate sensor 50, the temperature (T2) detected by the second temperature sensor 52, and the temperature (T3) detected by the outdoor air temperature sensor 53. The information processor 40 may then calculate the monetary value (V) in accordance with expression (4) below. Although an actual area heat network is seldom established in a wide range where values of the temperature (T3) of the fuel cells A to C differ significantly, the expression is denoted as follows for convenience of description.

$$ V = (T2 - T3) \times F \times \beta \ldots (4) $$

This expression includes "β" as a predetermined coefficient. Here, "β" may be equal to "α" mentioned above or may be different therefrom. FIG. 5 exemplifies the case where the residence including the fuel cell A has 40°C as T2 (drainage temperature), 20°C as T3 (temperature), and a liters as F (flow rate). The monetary value is $20 \times a \times \beta$ in this case. In expression (4), T3 may be replaced with a reference temperature T0. The reference temperature T0 may be set to 20°C or the like regardless of the outdoor air temperature. The reference temperature T0 may be changed every season or every month. For calculation of the monetary value (V), the temperature difference between the temperature (T2) detected by the second temperature sensor 52 and the reference temperature may be cumulatively totalized, and F (flow rate) may be totalized in a certain period.

The hot water supply unit is not described in the first and second embodiments. When the hot water supply unit is provided in the first and/or second embodiment, the monetary value may be calculated as in the third embodiment.

When the source gas is a methanation gas obtained by synthesizing hydrogen and carbon dioxide, the thermal environment score may have additional environmental value.

The present disclosure has been described with reference to the figures and the embodiments. Note that those skilled in the art can easily apply variations and corrections in accordance with the present disclosure. Accordingly, note that these variations and corrections are included in the scope of the present disclosure.

REFERENCE SIGNS

1 power generation system
10 power generator
11 fuel cell
12 heat exchanger
13 circulation path
14 liquid flow path
15 controller
16 reformed water tank
17 reformed water pump
18 heat medium tank
19 heat medium pump
20 supply path
21 hot water supply path
22 clean water heat exchanger
30 heat conduit
40 information processor
50 flow rate sensor
51 first temperature sensor
52 second temperature sensor
53 outdoor air temperature sensor
54 third temperature sensor
101 power generation unit
102 heat medium unit
201 hot water supply unit
202 facility for in-house consumption
203 drainage facility
204 sewage pipe

**Claims**

1. A power generation system comprising:

   a power generator comprising a power generation unit including a fuel cell; and
   an information processor, wherein
   the power generation system is configured to provide a user with heat generated in the fuel cell, and
   the information processor calculates a monetary value in accordance with a detected amount of heat provided to the user.

2. The power generation system according to claim 1, wherein

   the power generator comprises a heat medium unit configured to retain a heat medium retaining at least a portion of the heat generated in the fuel cell, the heat medium unit being connected to a heat conduit configured to discharge heat, and
   the information processor calculates the monetary value in accordance with the detected amount of heat in the heat conduit.

3. The power generation system according to claim 2, wherein
   the power generator is controlled to supply heated water from the heat medium unit via the heat conduit not only upon a power outage but also during normal power generation.

4. The power generation system according to claim 2 or 3, wherein
   the power generator is controlled to supply the heat medium from the heat medium unit via the heat conduit before a heat medium tank in the heat medium unit becomes full.

5. The power generation system according to any one of claims 1 to 4, wherein
   the information processor calculates the monetary value to increase upon a reverse power flow.

6. The power generation system according to any one of claims 1 to 5, wherein
   the information processor calculates the monetary value to increase when the power generation unit has a function of a virtual power plant or demand response.

7. The power generation system according to claim 2, wherein
the heat generated in the fuel cell includes surplus heat in drainage after in-house consumption, and the surplus heat is discharged via the heat conduit.

8. The power generation system according to claim 7, wherein

the fuel cell and a facility for in-house consumption interpose a hot water supply unit, and
a flow rate of the drainage is used for calculation of the monetary value and is measured by a flow rate sensor included in the hot water supply unit.

9. The power generation system according to claim 7 or 8, wherein

the facility for in-house consumption and a sewage pipe interpose a drainage facility comprising the heat conduit coupling the facility for in-house consumption and the sewage pipe, and
a temperature of the drainage is used for calculation of the monetary value and is measured at the heat conduit included in the drainage facility.

10. The power generation system according to claim 9, wherein
the drainage having the temperature to be measured is waste water.

11. The power generation system according to claim 10, wherein
the drainage having the temperature to be measured contains at least bath drainage.

12. The power generation system according to any one of claims 1 to 11, wherein
the information processor totalizes the detected amount of heat provided by the power generator to the user and a heat amount actually utilized by the user and calculates the monetary value proportionally divided in accordance with a contribution degree of each of a plurality of power generators configured identically to the power generator.

13. An information processor configured to calculate, in a power generation system configured to provide a user with heat generated in a fuel cell included in a power generation unit in a power generator, a monetary value in accordance with a detected amount of heat provided to the user.

# FIG. 1

# FIG. 2

EP 4 394 954 A1

# FIG. 3

EP 4 394 954 A1

FIG. 4

EP 4 394 954 A1

# FIG. 5

INFORMATION PROCESSOR  40

(FUEL CELL A)
WATER IN, TEMPERATURE: 20°C
WATER DISCHARGE: 40°C
FLOW RATE: a$\ell$

(FUEL CELL B)
WATER IN, TEMPERATURE: 25°C
WATER DISCHARGE: 50°C
FLOW RATE: b$\ell$

(FUEL CELL C)
WATER IN, TEMPERATURE: 15°C
WATER DISCHARGE: 45°C
FLOW RATE: c$\ell$

USER
40°C
y$\ell$
(TEMPERATURE 20°C)

USER

MONETARY VALUE

(FUEL CELL A)
20°C × a$\ell$ × PREDETERMINED COEFFICIENT

(FUEL CELL B)
25°C × b$\ell$ × PREDETERMINED COEFFICIENT

(FUEL CELL C)
30°C × c$\ell$ × PREDETERMINED COEFFICIENT

EP 4 394 954 A1

## INTERNATIONAL SEARCH REPORT

| International application No. |
|---|
| **PCT/JP2022/031889** |

### A. CLASSIFICATION OF SUBJECT MATTER

*H01M 8/00*(2016.01)i; *H01M 8/04*(2016.01)i; *H01M 8/04014*(2016.01)i; *H01M 8/04029*(2016.01)i;
*H01M 8/04313*(2016.01)i; *H01M 8/0432*(2016.01)i; *H01M 8/0438*(2016.01)i; *H01M 8/04537*(2016.01)i;
*H01M 8/04746*(2016.01)i; *H01M 8/10*(2016.01)i; *G06Q 50/06*(2012.01)i; *F24H 1/00*(2022.01)i
FI:    H01M8/04 Z; F24H1/00 631A; G06Q50/06; H01M8/00 Z; H01M8/04014; H01M8/04029; H01M8/04313; H01M8/0432;
H01M8/0438; H01M8/04537; H01M8/04746; H01M8/10 101

According to International Patent Classification (IPC) or to both national classification and IPC

### B. FIELDS SEARCHED

Minimum documentation searched (classification system followed by classification symbols)

H01M8/00; H01M8/04; H01M8/04014; H01M8/04029; H01M8/04313; H01M8/0432; H01M8/0438; H01M8/04537;
H01M8/04746; H01M8/10; G06Q50/06; F24H1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-099897 A (AISIN CORP.) 01 July 2021 (2021-07-01) paragraphs [0035]-[0037], fig. 1, 2, 6 | 1-4, 13 |
| Y | | 5-6, 12 |
| A | | 7-11 |
| Y | JP 2021-057181 A (DAIWA HOUSE INDUSTRY CO., LTD.) 08 April 2021 (2021-04-08) paragraph [0081] | 5-6 |
| Y | JP 2018-057151 A (DAIWA HOUSE INDUSTRY CO., LTD.) 05 April 2018 (2018-04-05) paragraphs [0042], [0061] | 12 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 September 2022** | **04 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/031889**

| Patent document cited in search report | | | Publication date (day/month/year) | Patent family member(s) | | | Publication date (day/month/year) |
|---|---|---|---|---|---|---|---|
| JP | 2021-099897 | A | 01 July 2021 | CN fig. 1, 2, 6 | 113013447 | A | |
| JP | 2021-057181 | A | 08 April 2021 | (Family: none) | | | |
| JP | 2018-057151 | A | 05 April 2018 | (Family: none) | | | |

Form PCT/ISA/210 (patent family annex) (January 2015)

**EP 4 394 954 A1**

**REFERENCES CITED IN THE DESCRIPTION**

**Patent documents cited in the description**

- JP 2021139424 A
- JP 2022054361 A
- JP 2021061733 A